# EUROPEAN PATENT APPLICATION

(11) **EP 2 479 063 A2**
(43) Date of publication of application: **25.07.2012**
(21) Application number: 12151080.4
(22) Date of filing: 13.01.2012
(51) Int. Cl.: B60Q 1/14, F21S 8/10, B60Q 1/00

(54) **Optical unit and vehicular lamp**

(30) Priority: 24.01.2011 JP 2011011895
(71) Applicant: Koito Manufacturing Co., Ltd., Tokyo 108-8711 (JP)
(72) Inventor: Naganawa, Masahito, Shizuoka (JP); Matsumoto, Akinori, Shizuoka (JP)
(74) Representative: HOFFMANN EITLE

(57) **Abstract**

[TASK] To provide art for forming a light distribution pattern that has a clear vertical cut-off line with the use of a parabolic vehicular lamp.

[MEANS OF SOLVING THE PROBLEM] A vehicular lamp is for froming a light distribution pattern that has a vertical cut-off line. The vehicular lamp has a light-emitting element 34a that has a genrally rectangular light-emitting surface 34af and a parabola optical system reflector 32b that reflects light from the light-emitting element 34a to the front of the lamp, and is configured to form the vertical cut-off line with the use of a long side 34af1 of the light-emitting surface 34af.

## Description

### [Technical Field]

The present invention relates to an optical unit and a vehicular lamp equipped with the optical unit.

### [Related Art]

Patent Documents 1 and 2 disclose so-called parabolic vehicular lamps each equipped with a light-emitting element and a parabola optical system reflector that reflects light from the light-emitting element to the front of the lamp. These vehicular lamps are vehicular lamps for forming a low-beam distribution pattern.

### [Prior Art Documents]

### [Patent Documents]

[Patent Document 1] Japanese Patent Application Laid-Open (Kokai) No. 2008-226707
[Patent Document 2] Japanese Patent Application Laid-Open (Kokai) No. 2008-226706

### [Disclosure of the Invention]

### [Problem to be Solved by the Invention]

Generally, a vehicular lamp that is used as a vehicular headlamp is able to switch a light distribution pattern between a low-beam distribution pattern and a high-beam distribution pattern. In recent years, there has been developed a vehicular lamp that is structured so as to be able to form, in addition to a low-beam distribution pattern and a high-beam distribution pattern, a special light distribution pattern that has a shape intermediate between the low-beam distribution pattern and the high-beam distribution pattern, and that is able to execute ADB (Adaptive Driving Beam) control for forming a light distribution pattern on the basis of presence or absence of other vehicles in an area ahead of the host vehicle.

As the above-described special light distribution pattern, there is a so-called one-sided high-beam distribution pattern which includes an area above a cut-off line of the low-beam distribution pattern and on the left side or right side of a vertical line. The one-sided high-beam distribution pattern has a vertical cut-off line that extends in the vertical direction. The vertical cut-off line is the boundary between a light radiation area and a light-blocking area that are located above the cut-off line of the low-beam distribution pattern and that are next to each other in the horizontal direction.

The above-described ADB control is supposed to be executed in a so-called projector-type vehicular lamp because a special light distribution pattern is formed relatively easily with the projector-type vehicular lamp. However, the inventors conceived of the idea of executing the ADB control in a parabolic vehicular lamp. When a parabolic vehicular lamp is used, the cost of a vehicular lamp is made lower than when a projector-type vehicular lamp is used. The inventors then realized that a conventional parabolic vehicular lamp has room for improvement in terms of forming a clear vertical cut-off line.

The present invention has been made based on such realization achieved by the inventors, and it is an object of the present invention to provide art for forming a light distribution pattern that has a clear cut-off line with the use of a parabolic vehicular lamp.

### [Means for Achieving the Object]

In order to achieve the above-described object, an aspect of the invention provides a vehicular lamp for forming a light distribution pattern that has a vertical cut-off line, characterized by comprising: a light-emitting element that has a generally rectangular light-emitting surface; and a parabola optical system reflector that reflects light from the light-emitting element to a front of the lamp, wherein the vehicular lamp is configured to form the vertical cut-off line with the use of a long side of the light-emitting surface.

According to the aspect described above, it is possible to form a light distribution pattern that has a clear vertical cut-off line with the use of a parabolic vehicular lamp.

In the aspect described above, an angle formed between the long side of the light-emitting surface and the vertical line may be within a range of ±15° with respect to the vertical line. With this structure, it is possible to more easily make a long side of a light source image, which corresponds to the long side of the light-emitting surface, coincide with the vertical cut-off line.

Another aspect of the invention relates to an optical unit that is used in a vehicular lamp for forming a light distribution pattern that has a vertical cut-off line, characterized by comprising: an element mounting portion to which a light-emitting element that has a generally rectangular light-emitting surface is fixed; and a parabola optical system reflector that reflects light from the light-emitting element fixed to the element mounting portion to a front of the lamp, wherein the optical unit is configured to form the vertical cut-off line with the use of a long side of the light-emitting surface of the light-emitting element fixed to the element mounting portion.

According to this aspect as well, it is possible to form a light distribution pattern that has a clear vertical cut-off line with the use of a parabolic vehicular lamp.

### [Effects of the Invention]

According to the present invention, it is possible to provide art for forming a light distribution pattern which has a clear vertical cut-off line with the use of a parabolic vehicular lamp.

### [Brief Description of the Drawings]

[FIG. 1]

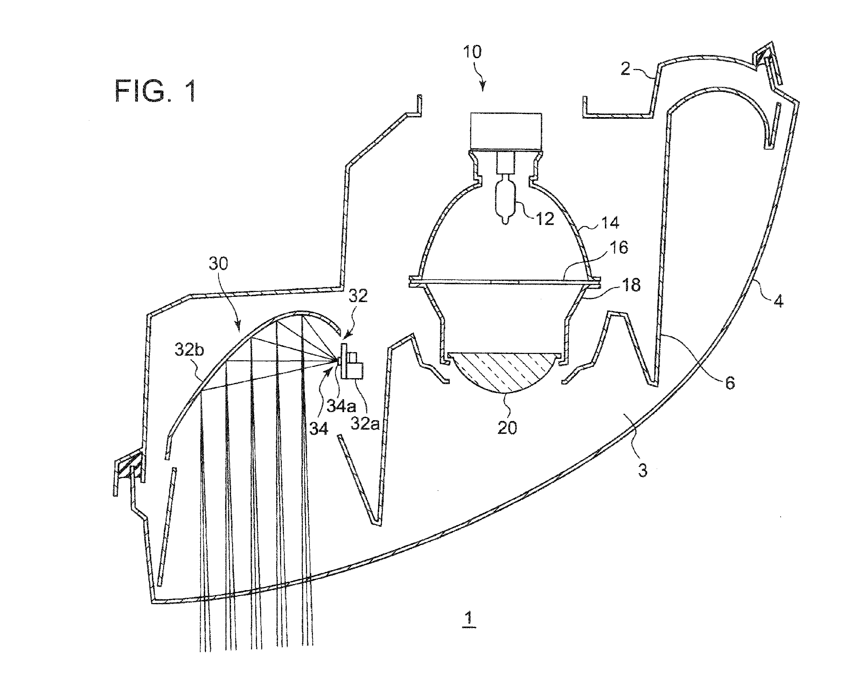

   FIG. 1 is a schematic horizontal cross-sectional view of a vehicular lamp according to a first embodiment.
[FIG. 2]

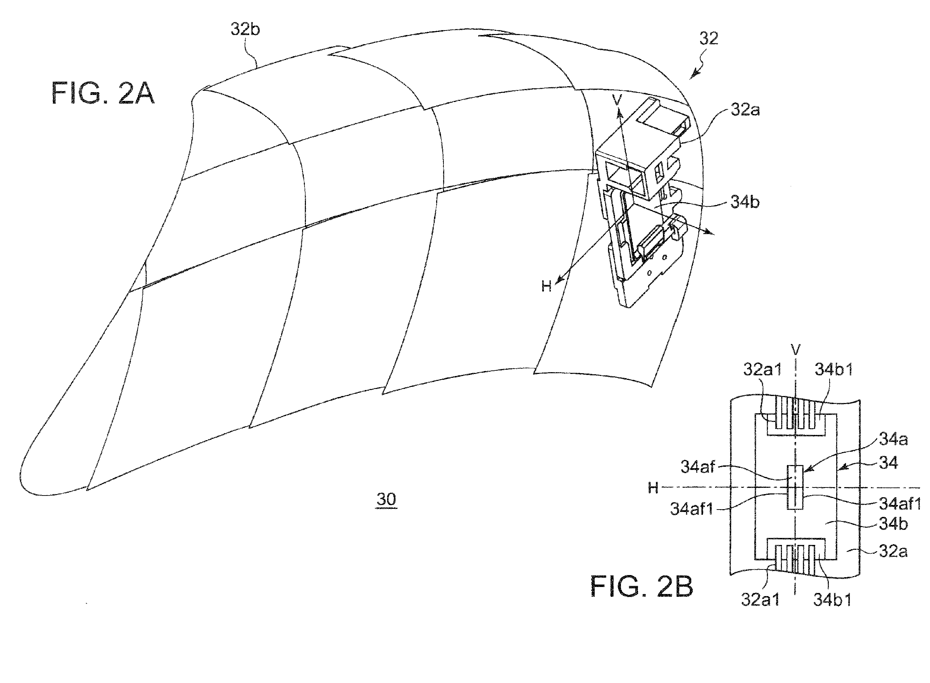

   FIG. 2A is a schematic perspective view of a lamp unit that forms a vertical cut-off line forming portion pattern. FIG. 2B is a schematic partial plan view of the vicinity of a light-emitting element in the lamp unit that forms the vertical cut-off line forming portion pattern.
[FIG. 3]

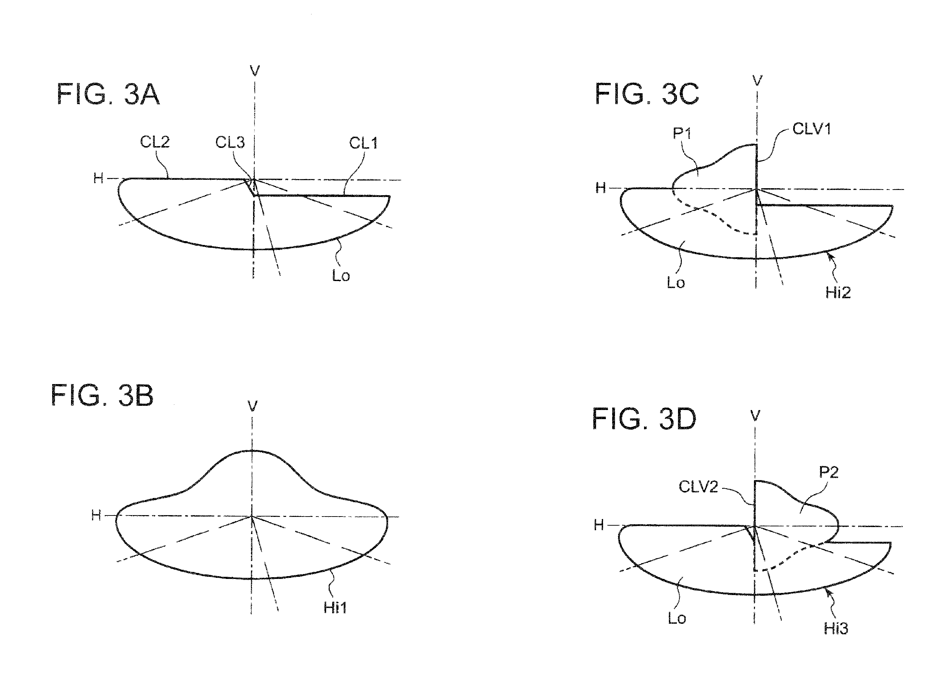

   FIG. 3A to FIG. 3D are diagrams of light distribution patterns formed by the vehicular lamp according to the first embodiment.
[FIG. 4]

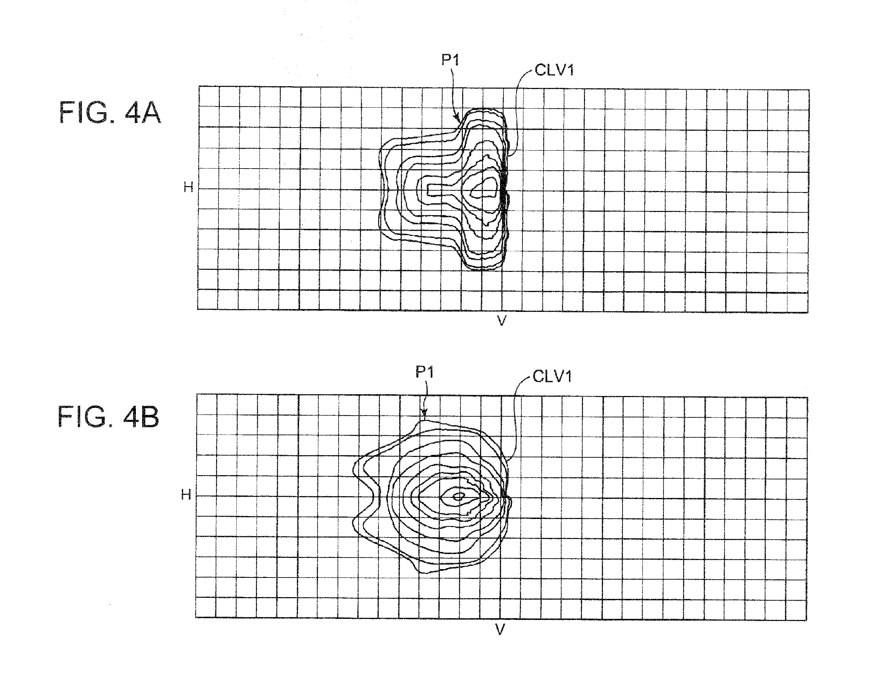

   FIG. 4A is an isolux curve diagram of the vertical cut-off line forming portion pattern formed by the vehicular lamp according to the first embodiment. FIG. 4B is an isolux curve diagram of a vertical cut-off line forming portion pattern formed by a vehicular lamp according to a comparative example.

### [Mode for Carrying Out the Invention]

Hereinafter, the present invention will be described based on a preferred embodiment with reference to drawings. Like reference numerals are used for like or corresponding structural elements, members, and processes shown in the drawings, and duplicate descriptions are omitted as appropriate. The embodiments do not intend to limit the invention, but exemplify the invention. All of the features and the combinations thereof described in the embodiments are not necessarily essential to the invention.

### (First embodiment)

FIG. 1 is a schematic horizontal cross-sectional view of a vehicular lamp according to a first embodiment. FIG. 2A is a schematic perspective view of a lamp unit that forms a vertical cut-off line forming portion pattern. FIG. 2B is a schematic partial plan view of the vicinity of a light-emitting element in the lamp unit that forms the vertical cut-off line forming portion pattern. A vehicular lamp 1 according to the present embodiment is a vehicular headlamp device that has a pair of headlamp units respectively disposed on the left and right of the vehicle front. The paired headlamp units have substantially the identical structure except that they have bilaterally-symmetric structures. Therefore, FIG. 1 shows the structure of the headlamp unit disposed on the left side of the vehicle front as the vehicular lamp 1.

As shown in FIG. 1, the vehicular lamp 1 according to the present embodiment includes a lamp body 2 which has an opening on the vehicle front side, and a translucent cover 4 attached to cover the opening of the lamp body 2. The translucent cover 4 is made of resin, glasses, or the like that has translucency. Inside a lamp chamber 3 which is defined by the lamp body 2 and the translucent cover 4, a lamp unit 10 and a lamp unit 30 are accommodated. The lamp unit 10 and the lamp unit 30 are attached to the lamp body 2 via respective supporting members (not shown), and accommodated in the lamp chamber 3. Because the structure for attaching the lamp units 10 and 30 to the lamp body 2 is known, detailed description thereof will be omitted.

Inside the lamp chamber 3, an extension member 6 which has openings in areas where the lamp units 10 and 30 are provided is accommodated. The extension member 6 is fixed to the lamp body 2. The opening of the lamp body 2 and the area between the lamp units 10 and 30 are covered by the extension member 6 when viewed from the front of the lamp.

The lamp unit 10 is a lamp unit for forming a low-beam distribution pattern and a high-beam distribution pattern. The lamp unit 10 is a so-called projector-type lamp unit, and has a light source bulb 12, a reflector 14, a shade 16, a lens holder 18, and a projection lens 20. As the light source bulb 12, an incandescent lamp which has a filament, such as a halogen lamp, or a discharge lamp which is formed from an HID lamp (also called "discharge lamp") such as a metal halide bulb may be adopted. As a light source, a light-emitting element such as an LED may be adopted.

The reflector 14 is formed in a cup shape and has an insertion hole at its center. The light source bulb 12 is inserted in the insertion hole of the reflector 14, and fixed to the reflector 14. A generally ellipsoidal spherical reflective surface is formed in at least part of the reflector 14, and the light source bulb 12 is disposed in the vicinity of a primary focal point of the reflective surface. In the vicinity of a secondary focal point of the reflective surface, a rear side focal point of the projection lens 20, described later, is set.

The shade 16 is a flat plate member, and is disposed so as to be able to advance or retract with respect to an optical axis of the lamp unit 10. The shade 16 is disposed such that its edge portion is located in the vicinity of the secondary focal point of the reflector 14 or the rear focal point of the projection lens 20 when the shade 16 is in an advanced position with respect to the optical axis. The edge portion has a shape that corresponds to a cut-off line of the low-beam distribution pattern. When the shade 16 is in the advanced position with respect to the optical axis, the light coming directly from the light source bulb 12 and the light reflected by the reflector 14 are partially blocked.

The projection lens 20 is formed from a planoconvex nonspherical lens that has a convex front side surface and a flat rear side surface. The projection lens 20 projects a light source image formed on a rear focal plane including the rear focal point of the projection lens 20 onto a virtual vertical screen in front of the lamp, as an inverted image. The projection lens 20 is fixed to the front end portion of a lens holder 18. The lens holder 18 is fixed at its rear end portion to the front end portion of the reflector 14.

The light emitted from the light source bulb 12 is guided, directly or after being reflected by the reflector 14, to the projection lens 20 through the shade 16. When the shade 16 is in the advanced position with respect to the optical axis of the lamp unit 10, the light heading to the projection lens 20 is partially blocked by the shade 16, whereby the low-beam distribution pattern is formed. In contrast, when the shade 16 is in the retracted position with respect to the optical axis of the lamp unit 10, the high-beam distribution pattern is formed. Note that the lamp unit 10 may be a so-called parabolic lamp unit.

The lamp unit 30 is a lamp unit for forming a vertical cut-off line forming portion pattern (a light distribution pattern having a vertical cut-off line). The lamp unit 30 is a so-called parabolic lamp unit, and includes an optical unit 32 and a light source module 34. The optical unit 32 includes an element mounting portion 32a and a parabola optical system reflector 32b. The light source module 34 is fixed to the element mounting portion 32a of the optical unit 32. The element mounting portion 32a and the parabola optical system reflector 32b are connected to a heat sink (not shown). The heat sink is attached to the lamp body 2 via an aiming screw and a leveling shaft (both are not shown).

As shown in FIG. 2A and FIG. 2B, the element mounting portion 32a is a member to which a light-emitting element 34a is fixed. The element mounting portion 32a has power supply terminals 32a1, and the power supply terminals 32a1 are electrically connected with electrodes 34b1, described later, in a state where the light source module 34 is fixed to the element mounting portion 32a.

The light source module 34 is, for example, a light-emitting diode (LED), and has the light-emitting element 34a and a substrate 34b that supports the light-emitting element 34a. The light-emitting element 34a has a generally rectangular light-emitting surface 34af. The substrate 34b is a thermally conductive insulating substrate made of, for example, ceramic or the like. The electrodes 34b1 used to transmit electric power to the light-emitting element 34a are formed in the substrate 34b.

The parabola optical system reflector 32b is a reflection member used to reflect the light from the light-emitting element 34a fixed to the element mounting portion 32a to the front of the lamp. The parabola optical system reflector 32b has a reflective surface which uses, as a reference plane, part of a paraboloid of revolution which has a focal point in the vicinity of the light-emitting element 34a. Multiple steps are formed in the reflective surface.

The light emitted from the light-emitting element 34a is reflected to the front of the lamp by the steps of the reflective surface of the parabola optical system reflector 32b. Accordingly, a light source image that corresponds to the light-emitting surface 34af of the light-emitting element 34a is projected forward of the host vehicle, and the vertical cut-off line forming portion pattern, described later, is formed.

Light distribution patterns formed by the vehicular lamp 1 configured as described above will be described. FIG. 3A to FIG. 3D are diagrams of light distribution patterns formed by the vehicular lamp according to the first embodiment. FIG. 3A to FIG. 3D show the light distribution patterns formed on a virtual vertical screen set at a predetermined position in front of the lamp, for example, 25 meters ahead of the lamp.

The light distribution pattern in FIG. 3A is a low-beam distribution pattern Lo. The low-beam distribution pattern Lo is a light distribution pattern set such that glare is not given to other vehicles and pedestrians in an area ahead of the host vehicle when the host vehicle is driving on the left side of a road. The distribution pattern Lo is formed by the lamp unit 10 when the shade 16 is in the advanced position. The low-beam distribution pattern Lo has, at its upper end, an oncoming lane side cut-off line CL1 which is on the right side of a vertical line V and which extends in parallel with a horizontal line H, a host vehicle travel lane side cut-off line CL2 which is on the left of the vertical line V and which extends in parallel with the horizontal line H at a position higher than the oncoming lane side cut-off line CL1, and a oblique cut-off line CL3 which extends between the oncoming lane side cut-off line CL1 and the host vehicle travel lane side cut-off line CL2 to connect the cut-off lines CL1 and CL2 to each other. The oblique cut-off line CL3 extends diagonally upward to the left at an inclination angle of 45° with respect to the intersection of the oncoming lane side cut-off line CL1 with the vertical line V.

The light distribution pattern shown in FIG. 3B is a high-beam distribution pattern Hi1. The high-beam distribution pattern Hi1 is a light distribution pattern used to illuminate a wide area ahead of the host vehicle and an area distant from the host vehicle, and created by the lamp unit 10 when the shade 16 is in the retracted position. The high-beam distribution pattern Hi1 has a light radiation area above the cut-off lines of the low-beam distribution pattern Lo and on both the host vehicle travel lane side and the oncoming lane side.

The light distribution pattern shown in FIG. 3C is a left lane high-beam distribution pattern Hi2 for forming a so-called "left lane high-beam." The left lane high-beam distribution pattern Hi2 is a special high-beam distribution pattern which has a light radiation area above the cut-off lines of the low-beam distribution pattern Lo and on the host vehicle travel lane side, and has a light-blocking area on the oncoming lane side. The left lane high-beam distribution pattern Hi2 is formed by combining the low-beam distribution pattern Lo formed by the lamp unit 10 with a vertical cut-off line forming portion pattern P1 formed by the lamp unit 30. The vertical cut-off line forming portion pattern P1 is a light distribution pattern that extends in a predetermined area in the vertical direction, which is on the left side of the vertical line V and which includes the horizontal line H. The vertical cut-off line forming portion pattern P1 has a vertical cut-off line CLV1 that extends in the vertical direction at a position at which the vertical cut-off line CLV1 substantially coincides with the vertical line V. By forming the left lane high-beam distribution pattern Hi2, it is possible to enhance the driver visibility through high-beam radiation only to the host vehicle travel lane side without giving glare to oncoming vehicles and pedestrians.

The light distribution pattern shown in FIG. 3D is a right lane high-beam distribution pattern Hi3 for forming a so-called "right lane high-beam." The right lane high-beam distribution pattern Hi3 is a special high-beam distribution pattern which has a light radiation area above the cut-off line of the low-beam distribution pattern Lo and on the oncoming lane side, and has a light-blocking area on the host vehicle travel lane side. The right lane high-beam distribution pattern Hi3 is formed by combining the low-beam distribution pattern Lo formed by the lamp unit 10 with a vertical cut-off line forming portion pattern P2 formed by the lamp unit 30. The vertical cut-off line forming portion pattern P2 is a light distribution pattern that extends in a predetermined area in the vertical direction, which is on the right side of the vertical line V, and which includes the horizontal line H. The vertical cut-off line forming portion pattern P2 has a vertical cut-off line CLV2 that extends in the vertical direction at a position at which the vertical cut-off line substantially coincides with the vertical line V. By forming the right lane high-beam distribution pattern Hi3, it is possible to enhance the driver visibility through high-beam radiation only to the oncoming lane side without giving glare to preceding vehicles and pedestrians.

In the present embodiment, the vertical cut-off line forming portion pattern P1 is formed by the lamp unit 30 of the headlamp unit disposed on the left side, and the vertical cut-off line forming portion pattern P2 is formed by the lamp unit 30 of the headlamp disposed on the right side. Note that the structure of the vehicular lamp 1 is not particularly limited to this. For example, only either one of the vertical cut-off line forming portion patterns P1 and P2 may be formed by the lamp units 30 of the left and right headlamp units. In addition, the vertical cut-off lines CLV1 and CLV2 may each be formed at a position shifted by a predetermined amount from the vertical line V to the left or to the right in the vehicle width direction.

Here, the optical unit 32 is configured to form the vertical cut-off line CLV1, CLV2 with the use of a long side 34af1 of the light-emitting surface 34af of the light-emitting element 34a fixed to the element mounting portion 32a. This means that the positional relationship between the element mounting portion 32a of the optical unit 32 and the parabola optical system reflector 32b is determined such that the long side 34af1 of the light-emitting surface 34af forms the vertical cut-off line CLV1, CLV2. Accordingly, the positional relationship between the light-emitting element 34a and the parabola optical system reflector 32b is determined such that the long side 34af1 of the light-emitting surface 34af forms the vertical cut-off line CLV1, CLV2.

Specifically, as shown in FIG. 2A and FIG. 2B, the light-emitting element 34a is disposed such that the long sides 34af1 of the light-emitting surface 34af extend in parallel with the vertical line V. The parabola optical system reflector 32b is set so as to reflect, at the time of projecting a light source image which corresponds to the light-emitting surface 34af to the front of the vehicle, the light from the light-emitting element 34a such that the long side of the projected light source image extends in parallel with the vertical line V.

The angle formed between the long side 34af1 of the light-emitting surface 34af and the vertical line V is preferably within the range of ±15° with respect to the vertical line V. When the angle is within the range, it is easier to make the long side of the light source image, which corresponds to the long side 34af1 of the light-emitting surface 34af, coincide with the vertical cut-off line CLV1, CLV2, than when the angle falls outside the range. Therefore, it is possible to avoid increases in complexity of the structure of the optical unit 32.

FIG. 4A is an isolux curve diagram of the vertical cut-off line forming portion pattern formed by the vehicular lamp according to the first embodiment. FIG. 4B is an isolux curve diagram of a vertical cut-off line forming portion pattern formed by a vehicular lamp according to a comparative example. FIG. 4A and FIG. 4B show isolux curves of the vertical cut-off line forming portion pattern P1 that forms part of the left lane high-beam distribution pattern, as an example.

The lamp unit mounted on the vehicular lamp according to the comparative example to form the vertical cut-off line forming portion pattern is a common parabolic lamp unit which is conventionally known. The lamp unit has basically the same structure as the lamp unit 30 of the vehicular lamp 1 according to the present embodiment, but is different in that a light-emitting element is disposed such that the long sides of its light-emitting surface extend in parallel with the horizontal line H. Therefore, with the use of the vehicular lamp according to the comparative example, the short sides of light source images, which correspond to the short side of the light-emitting surface, are stacked in the vertical direction to form the vertical cut-off line CLV1.

Generally, a light-emitting surface of a light-emitting element has higher luminous intensity and luminance in its center portion than in its peripheral edge portion. This means that the light-emitting surface of the light-emitting element has higher luminous flux density in its center portion than in its peripheral edge portion. Thus, when a vertical cut-off line is formed with the use of the short side of a generally rectangular light-emitting surface as in the comparative example, the center portion of a light source image, which corresponds to a center portion of the light-emitting surface, is more distant from the position where the vertical cut-off line CLV1 is to be formed, than when a vertical cut-off line is formed with the use of the long side of the light-emitting surface. As described above, the center portion of the light-emitting surface has high luminous intensity, and therefore the center portion of the light source image, which corresponds to the center portion of the light-emitting surface, has high illuminance. Therefore, in the vertical cut-off line forming portion pattern P1 in the comparative example, a high illuminance area of the light source image is more distant from the position where the vertical cut-off line is to be formed, than in the vertical cut-off line forming portion pattern P1 in the first embodiment.

In other words, when the vehicular lamp 1 according to the first embodiment is used, it is possible to form the vertical cut-off line forming portion pattern P1 in which the high illuminance area of the light source image is closer to the area where the vertical cut-off line is to be formed, than when the vehicular lamp according to the comparative example 1 is used. As the comparison of FIG. 4A with FIG. 4B shows, when the vehicular lamp 1 according to the first embodiment is used, an outline portion of the vertical cut-off line forming portion pattern P1, which corresponds to the vertical cut-off line CLV1, is formed so as to conform to the vertical line V (the area in which the vertical cut-off line is to be formed) more closely, than when vehicular lamp in the comparative example is used. Therefore, with the use of the vehicular lamp 1 according to the first embodiment, it is possible to form the vertical cut-off line CLV1 that is clearer than that formed by the vehicular lamp according to the comparative example.

Note that the "generally rectangular shape" described above includes rectangles and shapes similar to a rectangle with which the object of the present invention is achieved.

As described above, the vehicular lamp 1 and the optical unit 32 according to the present embodiment are configured to form the vertical cut-off line CLV1, CLV2 with the use of the long side 34af1 of the generally rectangular light-emitting surface 34af of the light-emitting element 34a. This structure makes it possible to form the light distribution patterns that have the clear vertical cut-off lines CLV1 and CLV2 with the use of the parabolic vehicular lamp 1.

The present invention is not limited to the embodiment described above. Various modifications such as design changes based on the knowledge of persons having ordinary skill in the art may be added, and the embodiments with such added modifications are also included in the scope of the present invention. The new embodiments obtained by adding modifications to the embodiment above have effects of both combined embodiments and modifications.

According to the first embodiment above, the vehicular lamp 1 includes the lamp units 10 for forming the low-beam distribution pattern and the high-beam distribution pattern. However, the structure of the vehicular lamp 1 is not particularly limited, and the lamp units 10 may not be provided. Moreover, a lamp unit for forming another light distribution pattern may be provided instead of or in addition to the lamp units 10.

### [Description of the Reference Numerals]

- CLV1, CLV2: VERTICAL CUT-OFF LINES
- P1, P2: VERTICAL CUT-OFF LINE FORMING PORTION PATTERNS
- V: VERTICAL LINE
- 1: VEHICULAR LAMP
- 32: OPTICAL UNIT
- 32a: ELEMENT MOUNTING PORTION
- 32b: PARABOLA OPTICAL SYSTEM REFLECTOR
- 34a: LIGHT-EMITTING ELEMENT
- 34af: LIGHT-EMITTING SURFACE
- 34af1: LONG SIDE

## Claims

1. A vehicular lamp for forming a light distribution pattern that has a vertical cut-off line, **characterized by** comprising:
a light-emitting element that has a generally rectangular light-emitting surface; and
a parabola optical system reflector that reflects light from the light-emitting element to a front of the lamp, wherein
the vehicular lamp is configured to form the vertical cut-off line with use of a long side of the light-emitting surface.

2. The vehicular lamp according to claim 1, wherein an angle formed between the long side of the light-emitting surface and the vertical line is within a range of ±15° with respect to the vertical line.

3. An optical unit that is used in a vehicular lamp for forming a light distribution pattern that has a vertical cut-off line, **characterized by** comprising:
an element mounting portion to which a light-emitting element that has a generally rectangular light-emitting surface is fixed; and
a parabola optical system reflector that reflects light from the light-emitting element fixed to the element mounting portion to a front of the lamp, wherein
the optical unit is configured to form the vertical cut-off line with use of a long side of the light-emitting surface of the light-emitting element fixed to the element mounting portion.
